Europäisches Patentamt

(19) European Patent Office

Office européen des brevets

(11) Numéro de publication: **0 278 801**
**B1**

(12) **FASCICULE DE BREVET EUROPEEN**

(45) Date de publication du fascicule du brevet:
**30.05.90**

(51) Int. Cl.⁵: **F16F 13/00**

(21) Numéro de dépôt: **88400058.9**

(22) Date de dépôt: **13.01.88**

(54) **Dispositif d'isolation antivibratoire à amortissement hydraulique de l'élasticité radiale et procédés de réalisation d'un tel dispositif.**

(30) Priorité: **23.01.87 FR 8700762**

(43) Date de publication de la demande:
**17.08.88 Bulletin 88/33**

(45) Mention de la délivrance du brevet:
**30.05.90 Bulletin 90/22**

(84) Etats contractants désignés:
**AT BE DE ES FR GB GR IT LU NL SE**

(56) Documents cités:
**EP-A- 0 009 120
EP-A- 0 044 908
EP-A- 0 207 194
EP-A- 0 213 324
EP-A- 0 234 966
FR-A- 2 495 718

PATENT ABSTRACTS OF JAPAN,
vol. 10, no. 29 (M-451)[2086], 5 février 1986; &
JP-A-60 184 740 (KURASHIKI KAKOU K.K.) 20-09-1985
Idem
PATENT ABSTRACTS OF JAPAN,
vol. 6, no. 187 (M-158)[1065], 25 septembre 1982; &
JP-A-57 94 146 (KINUGAWA GOMU KOGYO
K.K.) 11-06-1982
PATENT ABSTRACTS OF JAPAN,**

(73) Titulaire: **CAOUTCHOUC MANUFACTURE ET
PLASTIQUES, 143bis, rue Yves le Coz,
F-78005 Versailles(FR)**

(72) Inventeur: **De Fontenay, Etienne, 4, Route de Moulins,
F-58300 Decize(FR)**

(56) Documents cités: (suite)
**vol. 6, no. 187 (M-158)[1065], 25 septembre 1982; &
JP-A-57 94 147 (KINUGAWA GOMU KOGYO
K.K.) 11-06-1982
PATENT ABSTRACTS OF JAPAN,
vol. 9, no. 162 (M-394)[1885], 6 juillet 1985; &
JP-A-60 34 542 (BRIDGESTONE K.K.) 22-02-1985**

ACTORUM AG

## Description

L'invention concerne le domaine des dispositifs d'isolation antivibratoire de machines et, plus particulièrement, celui des supports élastiques de moteurs de véhicules.

Elle est relative à la famille de ces supports élastiques qui présente une grande flexibilité apportant une amélioration du filtrage des hautes fréquences vibratoires où le risque d'entrée en résonance à la fréquence propre des masses suspendues est repoussé grâce à la fonction d'amortissement hydraulique intégrée au dispositif.

L'invention est particulièrement adaptée à une disposition couramment utilisée, en particulier dans les ensembles moto-propulseurs de type transversal, dans les véhicules à traction avant, où l'un au moins des points de suspension dudit ensemble est constitué d'une pièce élastique de révolution, emmanchée à force par un tube qui en est partie intégrante dans un alésage disposé, soit dans un carter, soit dans un support rapporté, au moment du montage, sur le groupe motopropulseur, et traversée par un axe permettant la fixation dans une chape ou bien par un boulon en porte à faux assurant la liaison avec le chassis.

L'art antérieur montre que la géométrie de révolution permet commodément de disposer, entre éléments rigides, un élastomère adhérisé assurant la rigidité radiale et une entrée en butée progressive, passant, d'une zone libre de grande flexibilité de quelques millimètres à une élasticité contrôlée mais, par exemple, cinq fois plus élevée, sur une course encore plus faible.

Cette élasticité contrôlée est nécessaire pour réagir au couple moteur ainsi qu'au frein moteur dans les deux sens de basculement du groupe motopropulseur.

Les dispositifs utilisant cette géométrie permettent, par l'usage d'alvéoles appropriées, de procurer des flexibilités différentes dans les trois directions, d'une part, et des variations de la rigidité radiale, d'autre part, variations dues à la fermeture de ces alvéoles qui assurent des flexibilités élevées et, par conséquent, les basses fréquences de suspension requises pour un bon filtrage antivibratoire. De tels dispositifs sont décrits, par exemple, dans les brevets FR. 2.335.744 de CITROEN et FR 2.441.101 de NISSAN.

Le brevet FR 2.551.161 de TOKAY RUBBER propose un manchonnage élastique, à remplissage de fluide, où un manchon de révolution comporte deux chambres opposées et une circulation de fluide amortie par le passage à travers des orifices, ainsi qu'une pièce de butée interne limitant les courses radiales.

Le brevet JP–A 60184 740 de KURASHIKI KAKOU K.K. propose un manchonnage élastique de même nature, où une chambre d'air fermée par une membrane périphérique au liquide d'amortissement absorbe les micro-amplitudes, tandis que les basses fréquences sont amorties à grande amplitude par ladite circulation de fluide dans le trou de circulation ménagé dans un anneau métallique solidaire de la bague interne.

L'un comme l'autre des dispositifs décrits dans ces brevets apporte l'amortissement par le freinage hydrodynamique du liquide au passage par un orifice de faible dimension. Les grandes amplitudes provoquent donc une réaction croissant, théoriquement, comme le carré de la vitesse.

Par ailleurs, des cales à flexibilité axiale constituées de ressorts coniques enfermant une chambre d'amortissement hydraulique se sont perfectionnées, en particulier, par l'usage d'une longue colonne inertielle de liquide accroissant, à basse fréquence, la rigidité apparente. De tels dispositifs sont décrits dans le certificat d'addition FR 2.462.618 et les brevets FR 2.443.615 et EP 027 751 de PEUGEOT et CITROEN.

L'analyse de l'art antérieur montre, à l'évidence, que des dispositifs à amortissement hydraulique, offrant les avantages d'une rigidité radiale appliquée à la géométrie de révolution mais utilisant les effets de masse d'une longue colonne de liquide inertielle ne sont pas connus.

L'invention a donc pour objectif d'appliquer à ce cas les effets de masse d'une telle colonne liquide inertielle, de grande longueur et de section suffisamment importante pour ne pas faire appel, pour la plus grande partie, à la viscosité du liquide dans le freinage des mouvements de liquide passant d'une chambre à une autre.

L'invention est constituée d'un dispositif élastique d'isolation antivibratoire à amortissement hydraulique radial et des procédés de réalisation d'un tel dispositif.

Le dispositif d'isolation antivibratoire à amortissement hydraulique de l'élasticité radiale, objet de l'invention, est constitué de deux tubes rigides concentriques, reliés par deux parois élastiques latérales, réalisées en composition élastomérique, disposés de manière à enfermer deux chambres remplies d'un liquide d'amortissement.

Le volume de l'ensemble restant relativement constant dans les déformations élastiques d'excentrement entre les deux tubes rigides concentriques, les deux chambres sont mises en communication entre elles par un canal laminaire, de faible épaisseur et de grande longueur, vis à vis de sa section, ménagé entre le tube rigide externe et un premier tube rigide intermédiaire, rétreint sur une partie de sa longueur. Ledit premier tube rigide intermédiaire est adhérisé à une première paroi élastique latérale, déformable et emmanché, à force, dans le tube rigide externe, lui-même adhérisé à une seconde paroi élastique latérale.

Le canal laminaire se déroule entre un orifice ménagé dans chaque chambre en décrivant au moins les trois quarts de la longueur de l'espace annulaire entre le tube rigide externe et le premier tube rigide intermédiaire.

Dans les débattements importants, en cours d'utilisation, l'inertie de la longue colonne de liquide contenue dans le canal laminaire bloque les déplacements et risque d'élever notablement et de manière indésirable - la rigidité apparente du dispositif élastique d'isolation antivibratoire.

Contre ce risque, l'invention comporte un dispositif anihilant cet effet de blocage, constitué de fenêtres souples, réalisées par une membrane déformable, ménagée dans un deuxième tube rigide intermédiaire fermant les chambres, et rendu solidaire d'un tube rigide interne, de fixation au chassis porteur.

Une faible course de la membrane souple, venant s'appuyer sur le tube rigide interne, abaisse de façon très notable la rigidité de rappel dynamique entre les constituants tubulaires, sur une course limitée, au delà de laquelle s'exerce le blocage dû à l'inertie de la colonne.

Le dispositif élastique d'isolation antivibratoire à amortissement hydraulique radial, objet de l'invention, ainsi que ses variantes, seront mieux compris à la lecture de la description ci-après et des dessins qui s'y rapportent et dans lesquels:

— la figure 1 illustre l'agencement d'ensemble du dispositif utilisé comme support élastique d'un groupe motopropulseur;
— la figure 2 est une coupe axiale montrant les composant du dispositif en place;
— la figure 3 présente les composants avant l'opération d'assemblage par emmanchement ou rétreint;
— la figure 4 détaille la disposition des communications entre les chambres;
— la figure 5 présente une variante du dispositif.

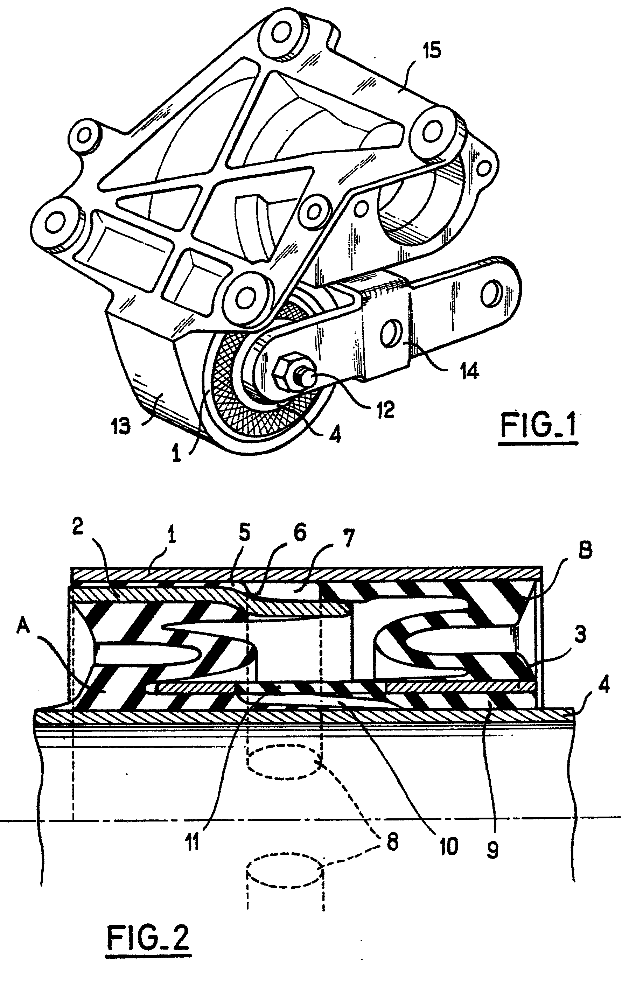

La figure 1 illustre l'agencement d'ensemble du dispositif utilisé comme support élastique d'un groupe motopropulseur.

Un tube rigide externe (1), généralement métallique, destiné à être emmanché à force — par exemple au cours de l'opération de préparation, hors de la chaîne de fabrication — dans l'alésage d'un élément de fixation (13) solidaire du carter (15) du groupe motopropulseur à suspendre, est assemblé, au moyen d'une liaison élastique, sur un tube rigide interne (4), généralement métallique ou réalisé en matière plastique, suffisamment épais pour admettre le serrage d'un boulon traversant (12), fixé par l'intermédiaire d'un élément de liaison (14) au chassis, comme représenté, ou bien serré axialement dans une chape jouant le même rôle.

La figure 2 est une coupe axiale, suivant un plan vertical, montrant les composants du dispositif en place.

Le tube rigide externe (1), destiné à l'emmanchement dans l'alésage de la machine à suspendre, et le second tube rigide intermédiaire (3), concentrique, sont adhérisés, au cours de l'opération de vulcanisation, par des procédés bien connus dans l'industrie de transformation du caoutchouc, à la seconde paroi élastique latérale (B).

Le premier tube rigide intermédiaire (2) et le tube rigide interne (4) sont, de même, adhérisés à la première paroi élastique latérale (A), opposée, le tube rigide interne (4) étant destiné à la fixation, par une chape ou par un boulon en porte-à-faux, sur le chassis fixe.

Le premier tube rigide intermédiaire (2) est emmanché, localement, de façon étanche, dans le tube rigide externe (1), soit axialement, soit par une machine à retreint radial, écrasant, sur au plus la demie longueur dudit premier tube rigide intermédiaire (2), une couche mince de composition élastomérique (5) pour assurer l'étanchéité avec la première paroi élastique latérale (A). Le premier tube rigide intermédiaire (2) est rétreint, sur la partie de sa longueur qui n'est pas en contact avec la couche mince de composition élastomérique (5), dans une zone (6) de révolution, sensiblement dans le plan médian de l'ensemble.

La zone de rétreint (6) du premier tube rigide intermédiaire (2), conjuguée avec une rainure non continue pratiquée dans la composition élastomérique intérieure au tube rigide externe (1) forme un canal laminaire (7) qui recevra le liquide d'amortissement contenu dans l'enceinte, après emmanchement.

La communication avec une chambre et l'autre s'opère grâce à deux trous (8), ménagés dans le premier tube rigide intermédiaire (2), et qui doivent être proches l'un de l'autre de façon à ce que la longueur du canal laminaire (7) soit au moins égale aux trois quarts de la longueur de l'espace annulaire entre le tube rigide externe (1) et le premier tube rigide intermédiaire (2). Les trous (8) doivent, néanmoins, être disposés de part et d'autre des bossages en composition élastomérique formés par excroissance locale de la première paroi élastique latérale (A) et de la second paroi élastique latérale (B) pour fermer les deux chambres, dans un plan sensiblement horizontal, pour la figure.

Le second tube rigide intermédiaire (3) est emmanché, dans une opération simultanée, par dessus le tube rigide interne (4), soit axialement, soit par le dudgeonnage dudit tube rigide interne (4), en écrasant une pellicule de composition élastomérique (9) pour assurer, dans certaines configurations du dispositif, une étanchéité dans l'évidement annulaire (10).

Des membranes minces (11), en composition élastomérique, sont formées, de la manière la plus simple, par le remplissage par la composition élastomérique, lors du moulage, des lacunes constituées par de grandes fenêtres percées dans le second tube rigide intermédiaire (3). De ce fait, les membranes minces (11) sont parties intégrantes du second tube rigide intermédiaire (3) dont elles constituent un prolongement géométrique dans les zones des fenêtres.

Une fenêtre dans chacune des chambres emplies de liquide modifie considérablement la rigidité du dispositif élastique de suspension antivibratoire, en permettant au volume dynamiquement confiné de liquide d'amortissement de se déformer lorsque la membrane mince (11) vient se plaquer sur le tube rigide interne (4).

Deux variantes du dispositif en permettent un fonctionnement différent, selon les besoins de l'utilisation.

Dans une première version, l'évidement annulaire (10), ménagé entre le second tube rigide intermédiaire (3) et le tube rigide interne (4), contient de l'air. Pour éviter la pollution de cet évidement annulaire (10) par du liquide d'amortissement, c'est à dire assurer la propreté de cet évidement annulaire (10), une rainure de mise à l'air libre est ménagée localement dans la pellicule de composition élastomérique (9), écrasée entre le second tube rigide intermédiaire (3) et le tube rigide interne (4). Cette configuration permet le réglage de la rigidité du dispositif à la valeur désirée pour les fréquences de l'utilisation.

Dans une seconde configuration, du liquide d'amortissement est emprisonné dans l'évidement annulaire (10), lors de l'opération d'emmanchement simultané pratiquée au sein du liquide d'amortissement suivant un procédé dit "en sous-marin".

Si les fenêtres percées dans le second tube rigide intermédiaire (3) ont même dimension, la déformation des membranes minces (11) qui les ferment sera égale et opposée et, le volume de l'évidement annulaire (10) étant sensiblement constant, le passage du liquide d'amortissement qui y est confiné, d'une fenêtre à l'autre, aura un effet de masse, parasite, analogue à celui de la colonne de liquide d'amortissement principale du canal laminaire (7). Il sera alors possible de jouer sur ces deux effets de masse différents pour bloquer la rigidité relative du dispositif à deux fréquences différentes, c'est-à-dire qu'il deviendra possible de disposer d'un minimum de rigidité entre les deux résonances, dans la fourchette de courses qu'il est souhaitable de contrôler, suivant les nécessités de l'application visée.

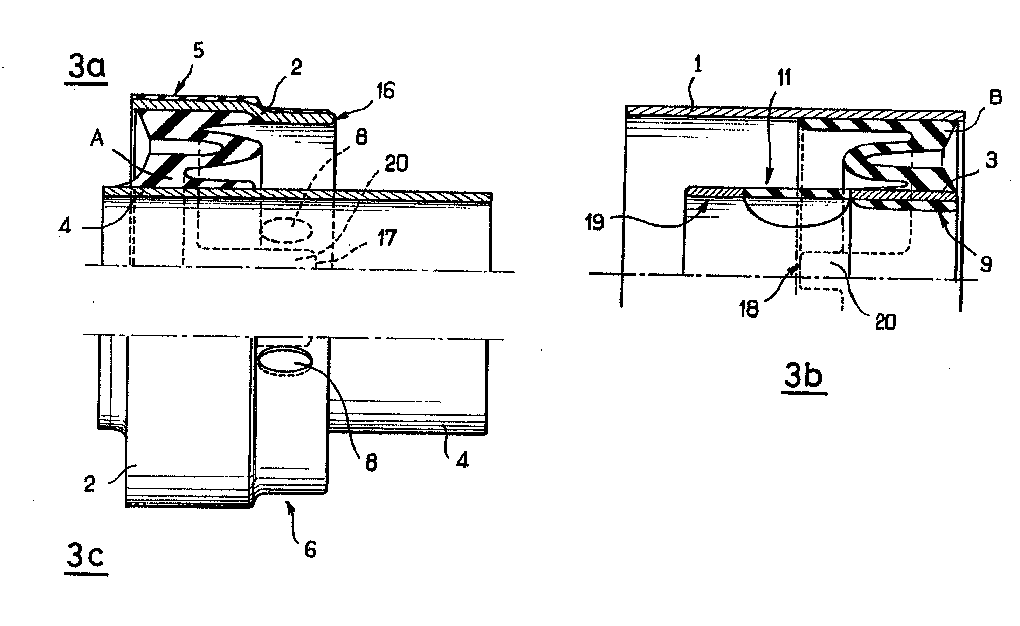

La figure 3 est une demie coupe, identique à la figure 2, mais présentant les composants du dispositif avant l'opération d'emmanchement ou de rétreint effectuée, par exemple, en "sous marin", les éléments constitutifs baignant dans le liquide d'amortissement.

La vue 3a montre le premier composant, fabriqué comme une articulation élastique de type caoutchouc/métal, qui est constitué du premier tube rigide intermédiaire (2), adhérisé par l'entremise de la première paroi élastique latérale (A) au tube rigide interne (4). Pour faciliter la compréhension, ce composant sera défini, dans la suite, comme l'ensemble tubulaire (2-A-4).

La forme de la première paroi élastique latérale (A) est représentée, à titre d'exemple non limitatif, de section généralement circulaire, à l'exception de bossages (20), situés dans le plan horizontal, pour fermer la moitié gauche des chambres haute et basse enfermant le liquide d'amortissement.

Le premier tube rigide intermédiaire (2) est recouvert, extérieurement, et au moins sur la longueur non rétreinte, d'une couche mince de composition élastomérique (5) destinée à assurer l'étanchéité.

Ledit premier tube rigide intermédiaire (2) est rétreint dans une zone (6) non en contact avec l'extrémité de la première paroi élastique latérale (A) pour constituer un canal offrant le passage à la colonne de liquide d'amortissement.

Deux trous (8), situés de part et d'autre du plan horizontal, assurent, après avoir été débarrassés de leurs bavures de composition élastomérique, la communication entre les chambres et ladite colonne de liquide d'amortissement.

L'extrémité (16) du premier tube rigide intermédiaire (2) qui est utilisé pour l'emmanchement dans la base de la second paroi élastique latérale (B), adhérisée au tube rigide externe (1) sera, avantageusement, chanfreinée, dans ce but.

La vue 3b montre le second composant, également fabriqué comme une articulation élastique de type caoutchouc/métal, qui est constitué du tube rigide externe (1), adhérisé par l'entremise de la seconde paroi élastique latérale (B) au second tube rigide intermédiaire (3). Ce second composant sera défini, dans la suite, comme l'ensemble tubulaire (1-B-3).

La forme de la seconde paroi élastique latérale (B) peut être très analogue à celle de la première paroi élastique latérale (A) et, comme représenté à titre d'exemple non limitatif, de section généralement circulaire, à l'exception de bossages (20), situés dans le plan horizontal, pour fermer la moitié droite des chambres haute et basse enfermant le liquide d'amortissement. A l'emmanchement, l'extrémité (18) du bossage (20) de la seconde paroi élastique latérale (B) vient au contact de l'extrémité (17) du bossage (20) porté par la première paroi élastique latérale (A).

Le second tube rigide intermédiaire (3) est revêtu, sur une partie de sa face interne, de la pellicule de composition élastomérique (9) destinée, dans certaines configurations, à assurer l'étanchéité sur le tube rigide interne (4). Son extrémité libre (19) étant utilisée pour l'emmanchement par dessus la zone de la première paroi élastique latérale (A) qui est adhérisée au tube rigide interne (4) sera, avantageusement, chanfreinée, dans ce but.

Par ailleurs, les membranes minces (11) du second tube rigide intermédiaire (3) sont obtenues par l'obturation par la composition élastomérique, lors du moulage, des fenêtres découpées dans la paroi dudit second tube rigide intermédiaire (3).

La vue 3c montre l'extérieur du tube rigide interne (4) et du premier tube rigide intermédiaire (2) avec sa zone de rétreint (6) comportant les trous (8) de communication avec les chambres contenant le liquide d'amortissement.

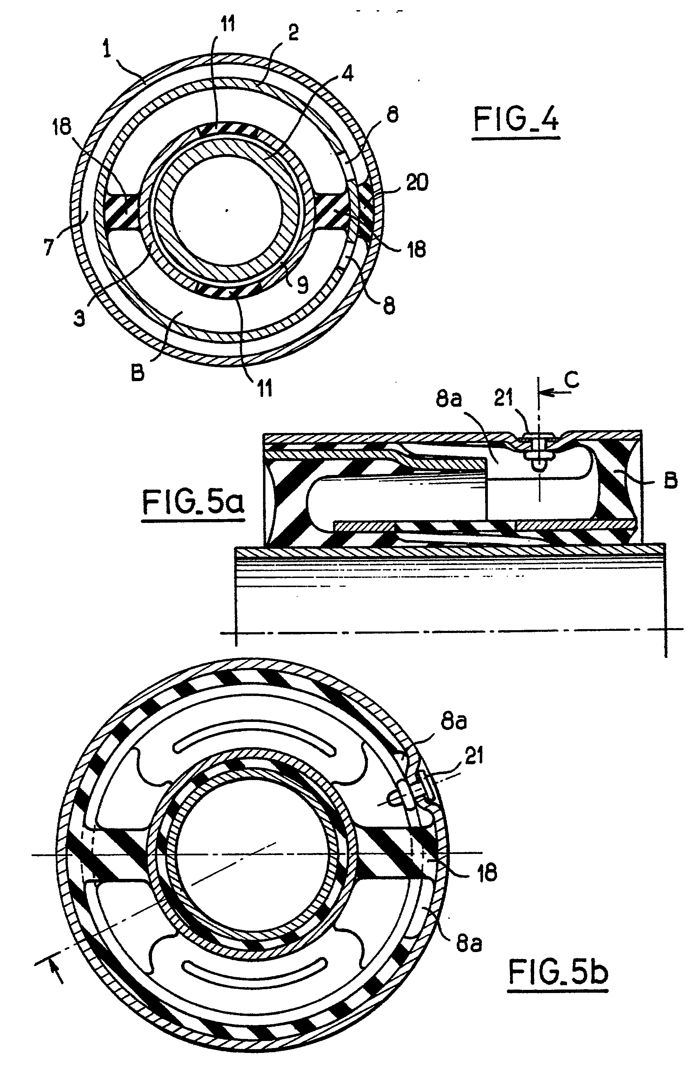

La figure 4, coupe par le plan médian de la figure 2 à travers le canal laminaire (7), détaille la disposition des communications entre les chambres.

Elle met en évidence la disposition concentrique, de l'extérieur du dispositif vers l'intérieur, des éléments constitutifs, soit:

– le tube rigide externe (1), continu et de précision géométrique extérieure suffisante pour l'emmanchement dans un alésage rigide, qui porte une zone de composition élastomérique formant bossage (20), venue de moulage dans la seconde paroi élastique latérale (B), pour combler la zone de rétreint du premier tube rigide intermédiaire (2) qui donne passage à la colonne de liquide d'amortissement contenue dans le canal laminaire (7) entre les trous (8), ménagés dans le premier tube rigide intermédiaire (2);

– le premier tube rigide intermédiaire (2), coupé dans la zone de rétreint où sont ménagés les trous (8) de communication avec les chambres, de part et d'autre des extrémités (18) du bossage (20) de la seconde paroi élastique latérale (B), qui séparent ces deux chambres;

– la seconde paroi élastique latérale (B), vue en bout, coupée ici uniquement dans le plan des extrémités (18) des bossages (20), plus précisément en appui étanche avec les extrémités (17) des bossages (20) identiques sur la première paroi élastique latérale (A);

– la seconde paroi élastique latérale (B) est adhérisée au tube rigide externe (1) et second tube rigide intermédiaire (3) et les bossages (20) font face aux extrémités (18) desdits bossages de part et d'autre d'une fente où vient passer, à l'emmanchement, l'extrémité (16) du premier tube rigide intermédiaire (2);

– le second tube rigide intermédiaire (3) qui comporte les deux membranes minces (11), en composition élastomérique, de même épaisseur que le second tube rigide intermédiaire lui-même, venues obturer les fenêtres pratiquées dans ledit second tube rigide intermédiaire;

– entre le second tube rigide intermédiaire (3) et le tube rigide interne (4), la pellicule de composition élastomérique (9) (vue en bout), écrasée lors de l'emmanchement ou du dudgeonnage;

– le tube rigide interne (4), d'épaisseur suffisante pour permettre le serrage par un boulon de fixation (non représenté).

La figure 5 représente une variante du dispositif élastique d'isolation antivibratoire, où la communication entre les chambres, assurée par les trous (8) de la figure 2, est réalisée par une rainure (8a), ménagée dans la seconde paroi élastique latérale (B), de part et d'autre de l'extrémité de bossage (18), venue de moulage avec la seconde paroi élastique latérale (B).

La vue 5a montre la position d'un rivet étanche (21) permettant, dans une variante du montage "en sous marin", le remplissage du dispositif au moyen du vide créé par l'orifice ultérieurement obturé par ledit rivet.

La vue 5b est une coupe du dispositif par le plan C de la vue 5a. Contrairement à la figure 4, cette vue ne coupe pas le premier tube rigide intermédiaire (2) qui est seulement vu en bout, comme l'est la première paroi élastique latérale (A) où est illustrée une possibilité de disposer des alvéoles conformément à la section de la figure 2. Cette vue montre également la communication entre les chambres annulaires remplies de liquide d'amortissement, par l'intermédiaire des rainures (8a) au delà de l'extrémité de bossage (18).

Les procédés de réalisation du dispositif élastique d'isolation antivibratoire à amortissement hydraulique de l'élasticité radiale font également l'objet de l'invention.

Un procédé préférentiel de fabrication d'un tel dispositif consiste à effectuer les opérations suivantes:

– Les deux ensembles tubulaires (2–A–4) et (1–B–3), décrits sur les vues 3a et 3b, sont réalisés par moulage sous presse avec traitement thermique assurant, simultanément, la vulcanisation des compositions élastomériques et la liaison intime desdites compositions élastomériques au tube rigide interne, au premier tube rigide et au second tube rigide intermédiaires et au tube rigide externe, jouant le rôle d'armatures, selon un procédé utilisé de manière classique dans l'industrie de transformation du caoutchouc;

– Une opération d'assemblage, utilisant une presse d'assemblage dit "en sous-marin", permet de rapprocher les ensembles tubulaires (2–A–4) et (1–B–3), décrits sur les vues 3a et 3b, dont toute bulle d'air a été chassée. L'extrémité (19) du second tube rigide intermédiaire (3) est engagée librement sur le tube rigide interne (4), tandis que l'extrémité préférentiellement chanfreinée (16) du premier tube rigide intermédiaire (2) s'engage dans le tube rigide externe (1) jusqu'à ce que la couche mince de composition élastomérique (5) et la pellicule de compôsition élastomérique (9) s'opposent à la pénétration.

L'effort d'emmanchement s'exerce, alors, par des butées circulaires décalées sur le rebord extérieur de chacun des tubes rigides, à une vitesse réglée pour qu'une pression interne appropriée soit maintenue par la rigidité propre de la première paroi élastique latérale (A) et de la seconde paroi élastique latérale (B).

Un autre procédé utilise, pour l'assemblage, une machine de rétreint radial du premier tube rigide intermédiaire (2) et un dudgeonnage du tube rigide interne (4).

Une variante du procédé consiste à pratiquer une mise sous vide de l'enceinte, préalablement au remplissage par le liquide destiné à assurer la fonction amortissement, puis à une obturation de l'orifice de remplissage par un rivet étanche borgne tel celui illustré en (21) sur la figure 5.

En conclusion, le dispositif d'isolation antivibratoire à amortissement hydraulique de l'élasticité radiale, objet de l'invention, présente les avantages suivants:

– facilité de montage équivalente à celle d'une "cale ronde", pouvant être mise en place en phase de préparation, hors chaîne, par emmanchement, sur un groupe motopropulseur et pouvant se fixer, lors de l'assemblage, par un boulon traversant, en chape ou en porte-à-faux;

– garantie d'une variation de rigidité importante, nécessaire entre une zone de bon filtrage des vibrations sur une faible course et une fonction de butée, néanmoins encore élastique, sur couple moteur ou frein moteur, par la complexité de forme, venue de moulage, des parois élastiques latérales réalisées dans une composition élastomérique de formulation adaptée;

– intégration, lors de la construction du dispositif, d'un amortissement de type hydraulique, basé sur les effets d'inertie d'une longue colonne de liquide enroulée qui amplifie, dans le rapport des sections, l'effet de masse du liquide d'amortissement, passant d'une chambre à l'autre lors de l'excentrement du support élastique à de faibles fréquences;

– suppression du risque de blocage des déplacements grâce à un artifice, constitué de membranes souples de débattement limité, fonctionnant comme un by-pass de ce liquide d'amortissement sur une très faible course, qui anihile la rigidité apparente que ce blocage inertiel présenterait aux vibrations de fréquences plus élevées;

– adaptabilité aux contraintes d'utilisation, par la possibilité, pour l'homme de l'art, sans modification des dispositions de construction, de choisir entre une ou deux valeurs maximales de la rigidité apparente en fonction de la fréquence des sollicitations, suivant l'application requise, par le remplissage d'une cavité par de l'air ou par le liquide d'amortissement, une simple rainure de mise à l'air libre pratiquée dans la pellicule de composition élastomérique entre l'un des tubes rigides intermédiaires et le tube rigide externe différenciant les deux configurations du même dispositif.

Cette adaptabilité pourrait être mise à profit pour réaliser, sur un véhicule sorti d'usine, une modification du dispositif autorisant une harmonisation des caractéristiques mécaniques de la suspension et des pneumatiques, par exemple.

Le dispositif à amortissement hydraulique de l'élasticité radiale, objet de l'invention, est destiné à assurer l'isolation antivibratoire de machines ou de moteurs de véhicules.

**Revendications**

1. Dispositif d'isolation antivibratoire à amortissement hydraulique de l'élasticité radiale, constitué de deux tubes rigides concentriques, un tube rigide externe (1) et un tube rigide interne (4), reliés par une première paroi élastique latérale (A) et une seconde paroi élastique latérale (B), réalisées en composition élastomérique, disposés de façon à enfermer deux chambres remplies d'un liquide d'amortissement, de volume total sensiblement constant, lesdites chambres étant mises en communication entre elles par un canal laminaire (7), caractérisé en ce que:
   – ledit premier tube rigide intermédiaire (2), rétreint sur une partie de sa longueur (6), adhérisé à la première paroi élastique latérale (A), déformable, et emmanché à force dans le tube rigide externe (1), lui-même adhérisé à la seconde paroi élastique latérale (B), forme le canal laminaire (7), rigide, de faible épaisseur, compris entre le tube rigide externe (1) et la partie rétreinte du premier tube rigide intermédiaire (2), et d'une longueur dans le sens circonférentiel au moins égale aux trois quarts de la longueur de l'espace annulaire entre le tube rigide externe (1) et le premier tube rigide intermédiaire (2), ledit canal laminaire (7) étant mis en communication avec chaque chambre semi-annulaire au moyen des trous (8) ménagés dans le premier tube rigide intermédiaire (2) ou d'une rainure (8a), ménagée, au moulage, dans la seconde paroi élastique latérale (B),
   – et en ce qu'un second tube rigide intermédiaire (3), adhérisé à la seconde paroi élastique latérale (B), et emmanché à force par dessus le tube rigide interne (4) en enfermant un évidement annulaire (10), comporte de larges fenêtres fermées par des membranes minces (11), souples, réalisées en composition élastomérique, qui viennent, dans les déformations en service, s'appuyer sur le tube rigide interne (4), adhérisé à la première paroi élastique latérale (A) et solidaire du chassis porteur, cette déformation de faible course des membranes minces (II) abaissant de façon notable la rigidité de rappel dynamique entre les deux ensembles tubulaires (1–B–3) et (2–A–4), normalement bloqués, à haute fréquence, par l'effet de masse de la colonne de liquide d'amortissement contenue dans le canal laminaire (7).

2. Dispositif d'isolation antivibratoire à amortissement hydraulique de l'élasticité radiale selon la revendication 1, caractérisé en ce que l'évidement annulaire (10), enfermé entre la membrane mince (11) du second tube rigide intermédiaire (3) et le tube rigide interne (4) qui en limite la course, est rempli d'air et est mis en communication avec l'atmosphère par une rainure ménagée à cet effet dans la pellicule de composition élastomérique (9), positionnée entre le second tube rigide intermédiaire (3) et le tube rigide interne (4).

3. Dispositif d'isolation antivibratoire à amortissement hydraulique de l'élasticité radiale selon la revendication 1, caractérisé en ce que l'évidement annulaire (10), enfermé entre la membrane mince (11) du second tube rigide intermédiaire (3) et le tube rigide interne (4) qui en limite la course, est rempli de liquide d'amortissement, confiné lors de l'emmanchement simultané ou du dudgeonnage des tubes, dont la masse présente un phénomène de colonne liquide résonant à une fréquence différente de celle de la colonne de liquide d'amortissement du canal laminaire (7), la combinaison des deux effets étant utilisée pour abaisser. la rigidité dynamique apparente du dispositif élastique dans les zones de fréquences visées.

4. Procédé de réalisation d'un dispositif d'isolation antivibratoire à amortissement hydraulique de l'élasticité radiale conforme à la revendication 1, caractérisé en ce que le processus d'assemblage qui succède au moulage des ensembles tubulaires (1–B–3) et (2–A–4) consiste en un emmanchement simultané de quatre tubes rigides concentriques – le tube rigide externe (1), étant relié, par l'adhérisation à une seconde paroi élastique latérale (B), au second tube ridide intermédiaire (3), le tube rigide interne (4) étant relié, par l'adhérisation à une première paroi élastique latérale (A) au premier tube rigide intermédiaire (2) ledit emmanchement simultané étant réalisé sous la surface d'un bain contenant le liquide amortissant de remplissage par la méthode dite "en sous-marin" après élimination de toute bulle d'air.

5. Procédé de réalisation d'un dispositif d'isolation antivibratoire à amortissement hydraulique de l'élasticité radiale conforme à la revendication 1, caractérisé en ce que le processus d'assemblage qui succède au moulage des ensembles tubulaires (1–B–3) et (2–A–4) consiste en un rétreint radial du tube rigide externe (1), un dudgeonnage du tube rigide interne (4), une mise sous vide de l'enceinte préalablement au remplissage par le liquide d'amortissement et une obturation de l'orifice de remplissage par un rivet étanche borgne (21).

**Claims**

1. Antivibrational insulation device with hydraulic damping of radial elasticity, comprising two rigid concentric tubes, being a rigid outer tube (1) and a rigid inner tube (4), joined together by a first elastic lateral wall (A) and a second elastic lateral wall (B) made from an elastomeric compound, arranged in such a manner as to enclose two chambers filled with a damping liquid, of substantially constant overall volume, said chambers being placed in communication with each other via a laminar channel (7), characterised in that the first rigid intermediate tube (2) constricted over a part of its length (6), bonded to the first elastic lateral wall (A), deformable and force-fitted into the rigid outer tube (1), which is itself bonded to the second elastic lateral wall (B), forms the rigid laminar channel (7) of small width comprised between the rigid outer tube (1) and the constricted portion of the first rigid intermediate tube (2) and having a length in the circumferential direction which is at least equal to three-quarters of the length of the annular space between the rigid outer tube (1) and the first rigid intermediate tube (2), said laminar channel (7) being placed in communication with each semi-annular chamber by means of holes (8) formed in the first rigid intermediate tube (2) or of a groove (8a) formed, during moulding, in the second elastic lateral wall (B), and in that a second rigid intermediate tube (3), bonded to the second elastic lateral wall (B) and force-fitted over the rigid inner tube (4) whilst enclosing an annular cavity (10), comprises wide openings closed off by thin and flexible diaphragms (11) made from an elastomeric compound which during operational deformations, bear on the rigid inner tube (4) bonded to the first elastic lateral wall (A) and integral with the carrying framework, this short-stroke deformation of the thin diaphragms (11) reducing in an appreciable manner the rigidity of dynamic return between the two tubular groups (1–B–3) and (2–A–4) which are normally locked at high frequency by the mass effect of the column of damping liquid contained in the laminar channel (7).

2. Antivibrational insulation device with hydraulic damping of radial elasticity according to claim 1, characterised in that the annular cavity (10) enclosed between the thin diaphragm (11) of the second rigid intermediate tube (3) and the rigid inner tube (4) which limits its displacement, is filled with air and is placed in communication with the atmosphere via a groove produced to that effect in the sheet of elastomeric compound (9) situated between the second rigid intermediate tube (3) and the rigid inner tube (4).

3. Antivibrational insulation device with hydraulic damping of radial elasticity according to claim 1, characterised in that the annular cavity (10) enclosed between the thin diaphragm (11) of the second rigid intermediate tube (3) and the rigid inner tube (4) which limits its displacement, is filled with damping fluid confined during the simultaneous fitting or flanging over of the tubes, the mass of which offers a fluid column action resonant at a different frequency from that of the column of damping liquid of the laminar channel (7), the combination of the two effects being used to reduce the apparent dynamic rigidity of the elastic device in the frequency ranges aimed at.

4. A method for producing an antivibrational insulation device with hydraulic damping of radial elasticity according to claim 1, characterised in that the assembling operation following the moulding of the tubular assemblies (1–B–3) and (2–A–4) consists in a simultaneous fitting of four rigid concentric tubes, the rigid outer tube (1) being connected by bonding to a second elastic lateral wall (B), to the second rigid intermediate tube (3), the rigid inner tube (4) being connected by bonding to a first elastic lateral wall (A) to the first rigid intermediate tube (2), said simultaneous fitting being performed under the surface of a bath containing the damping fluid for filling by the so-called "submerged" method after elimination of any air bubbles.

5. A method for producing an antivibrational insulation device with hydraulic damping of radial elasticity according to claim 1, characterised in that the assembling operation which follows the moulding of the tubular assemblies (1–B–3) and (2–A–4) consists in radially constricting the rigid outer tube (1), in flanging over the rigid inner tube (4), in placing the enclosure under vacuum prior to filling with the damping fluid and in plugging the filling hole by means of a blind, impervious rivet (21).

## Patentansprüche

1. Schwingungshemmende Isoliervorrichtung mit hydraulischer Dämpfung der radialen Elastizität, bestehend aus zwei starren konzentrischen Rohren, nämlich einem starren Außenrohr (1) und einem starren Innenrohr (4), die durch eine erste elastische Seitenwand (A) und eine zweite elastische Seitenwand (B) aus einer Elastomerverbindung miteinander verbunden und derart angeordnet sind, daß sie zwei mit einer Dämpfungsflüssigkeit von im wesentlichen konstantem Gesamtvolumen gefüllte Kammern umschließen, die durch einen Laminarkanal (7) miteinander kommunizieren, dadurch gekennzeichnet, daß ein erstes starres Zwischenrohr (2), das über einen Teil seiner Länge (6) eingeschnürt ist, an der ersten elastischen verformbaren Seitenwand (A) anhaftet und in das starre Außenrohr (1) eingepreßt ist, welches seinerseits an der zweiten elastischen Seitenwand (B) anhaftet, den starren Laminarkanal (7) geringer Dicke bildet, der zwischen dem starren Außenrohr (1) und dem eingeschnürten Teil des ersten starren Zwischenrohres (2) verläuft und dessen Länge in Umfangsrichtung zumindest drei Viertel der Länge des Ringraums zwischen dem starren Außenrohr (1) und dem ersten starren Zwischenrohr (2) beträgt, wobei der Laminarkanal (7) mit jeder semi-ringförmigen Kammer über Löcher (8) des ersten starren Zwischenrohres (2) oder eine Nut (8a) kommuniziert, die beim Formen in der zweiten elastischen Seitenwand (B) ausgebildet ist, und daß ein zweites starres Zwischenrohr (3), das an der zweiten elastischen Seitenwand (B) anhaftet, und unter Bildung eines Ringraumes (10) das starre Innenrohr (4) übergreifend eingepreßt ist, durch dünne, geschmeidige, aus einer Elastomerverbindung bestehende Membranen (11) verschlossene große Öffnungen aufweist, welche Membranen sich bei im Betrieb auftretenden Verformungen auf das starre Innenrohr (4) auflegen, das an der ersten elastischen Seitenwand (A) anhaftet und fest mit der Tragkonstruktion verbunden ist, wobei diese Verformung kleiner Amplitude der

7

dünnen Membranen (11) die dynamische Rückstellstarrheit zwischen den beiden normalerweise blockierten Rohreinheiten (1–B–3) und (2–A–4) bei hoher Frequenz aufgrund der Massewirkung der im Laminarkanal (7) befindlichen Dämpfungsflüssigkeitssäule merklich verringert.

2. Schwingungshemmende Isoliervorrichtung mit hydraulischer Dämpfung der radialen Elastizität nach Anspruch 1, dadurch gekennzeichnet, daß der zwischen der dünnen Membran (11) des zweiten starren Zwischenrohres (3) und dem den Ausschlag dieses Rohres begrenzenden starren Innenrohr (4) eingeschlossene Ringraum (10) mit Luft gefüllt ist und mit der Atmosphäre über eine Nut kommuniziert, die zu diesem Zweck in der zwischen den, zweiten starren Zwischenrohr (3) und dem starren Innenrohr (4) befindlichen Haut (9) aus einer Elastomerverbindung ausgebildet ist.

3. Schwingungshemmende Isoliervorrichtung mit hydraulischer Dämpfung der radialen Elastizität nach Anspruch 1, dadurch gekennzeichnet, daß der zwischen der dünnen Membran (11) des zweiten starren Zwischenrohres (3) und dem den Ausschlag dieses Rohres begrenzenden starren Innenrohr (4) eingeschlossene Ringraum (10) mit Dämpfungsflüssigkeit gefüllt ist, die bei gleichzeitigem Einpressen oder Einwalzen der Rohre eingeschlossen wird und deren Masse als Flüssigkeitssäule wirkt, die mit einer anderen Frequenz schwingt als die Dämpfungsflüssigkeitssäule des Laminarkanals (7), wobei die Kombination der beiden Effekte zur Verringerung der dynamischen Starrheit der elastischen Vorrichtung in den vorgesehenen Frequenzbereichen ausgenützt wird.

4. Schwingungshemmende Isoliervorrichtung mit hydraulischer Dämpfung der radialen Elastizität nach Anspruch 1, dadurch gekennzeichnet, daß der auf das Formen der Rohreinheiten (1–B–3) und (2–A–4) folgende Montagearbeitsgang aus einem gleichzeitigen Einpressen von vier starren konzentrischen Rohren besteht – dem starren Außenrohr (1), das durch Anhaften an einer zweiten elastischen Seitenwand (B) mit dem zweiten starren Zwischenrohr (3) verbunden ist, dem starren Innenrohr (4), das durch Anhaften an einer ersten elastischen Seitenwand (A) mit dem ersten starren Zwischenrohr (2) verbunden ist, – wobei das gleichzeitige Einpressen unterhalb der Oberfläche eines die Dämpfungsfüllflüssigkeit enthaltenden Bades durch das sog. "Unterwasser"- Verfahren nach Beseitigung aller Luftblasen stattfindet.

5. Verfahren zur Herstellung einer schwingungshemmenden Isoliervorrichtung mit hydraulischer Dämpfung der radialen Elastizität nach Anspruch 1, dadurch gekennzeichnet, daß der auf das Formen der Rohreinheiten (1–B–3) und (2–A–4) folgende Montagearbeitsgang aus einem radialen Einschnüren des starren Außenrohres (1), einem Einwalzen des starren Innenrohres (4), einem Luftleermachen des Raums vor dem Einfüllen der Dämpfungsflüssigkeit und einem Verschließen der Einfüllöffnung durch einen blinden Abdichtungsniet (21) besteht.

FIG.1

FIG.2

3a

5

2

16

A

8

20

4

17

3c

2

8

6

4

1

11

B

19

3

9

18

20

3b

EP 0 278 801 B1

FIG_4

FIG_5a

FIG_5b